(19) Europäisches Patentamt
European Patent Office
Office européen des brevets

(11) **EP 2 929 313 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **13802024.3**

(22) Anmeldetag: **04.12.2013**

(51) Internationale Patentklassifikation (IPC):
**G01M 3/16** (2006.01)  **G01B 7/06** (2006.01)
**G01N 15/08** (2006.01)

(52) Gemeinsame Patentklassifikation (CPC):
**G01B 7/08; G01M 3/16; G01N 15/08;**
G01N 2015/0853

(86) Internationale Anmeldenummer:
**PCT/EP2013/075511**

(87) Internationale Veröffentlichungsnummer:
**WO 2014/086843 (12.06.2014 Gazette 2014/24)**

(54) **VORRICHTUNG UND VERFAHREN ZUR BESTIMMUNG DER MITTLEREN SCHICHTDICKE SOWIE DER PERMEATIONSRATE EINES PACKMITTELS**

APPARATUS AND METHOD FOR DETERMINING THE AVERAGE LAYER THICKNESS AND THE PERMEATION RATE OF A PACKAGING MATERIAL

DISPOSITIF ET PROCÉDÉ POUR DÉTERMINER L'ÉPAISSEUR DE COUCHE MOYENNE ET LA VITESSE DE PERMÉATION D'UN EMBALLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2012 EP 12195956**

(43) Veröffentlichungstag der Anmeldung:
**14.10.2015 Patentblatt 2015/42**

(73) Patentinhaber: **BOEHRINGER INGELHEIM INTERNATIONAL GMBH**
**55216 Ingelheim am Rhein (DE)**

(72) Erfinder:
• **BALTHES, Eduard**
**55216 Ingelheim am Rhein (DE)**
• **BRAUN, Mathias**
**55216 Ingelheim am Rhein (DE)**

(74) Vertreter: **Simon, Elke Anna Maria et al**
**Boehringer Ingelheim GmbH**
**Binger Strasse 173**
**55216 Ingelheim am Rhein (DE)**

(56) Entgegenhaltungen:
**EP-A1- 2 009 432    EP-A2- 0 259 110**
**US-A- 4 952 882**

• **"Permeability testing of Flat Samples", , 5. Dezember 2012 (2012-12-05), XP055061336, www.versaperm.com Gefunden im Internet: URL:http://web.archive.org/web/20120512064 709/http://www.versaperm.com/flatsamples.p hp [gefunden am 2013-04-29]**
• **G. VAN HALTERN: TRACE MOISTURE MEASUREMENT WITH QUARTZ CRYSTAL MICROBALANCE TECHNOLOGY, vol. 1784, 2003, pages 81-86,**

EP 2 929 313 B1

**Beschreibung**

Die Erfindung betrifft ein Verfahren zur Bestimmung der mittleren Schichtdicke eines Packmittels, insbesondere Blister.

Hochwirksame Arzneimittel, insbesondere neue pharmazeutische Produkte sind häufig empfindlich, insbesondere gegenüber dem Einfluss von Feuchtigkeit und, in manchen Fällen, gegenüber Sauerstoff- bzw. Licht. Zur Sicherstellung der Produktstabilität muss die Verpackung ein empfindliches pharmazeutisches Produkt (vor allem Oralia und Inhalativa) vor allen relevanten Umwelteinflüssen während der Lager- sowie In-Use-Zeit hinreichend schützen. Auf Basis von grundlegenden Untersuchungen zu spezifischen pharmazeutischen Wirkstoffen sowie zu pharmazeutischen Formulierungen zu diesen Wirkstoffen ist die Korrelation zwischen dem Wassergehalt des Produkts und der Produktstabilität als hauptsächlich stabilitätskritischen Faktor im Regelfall bekannt.

Die aus dem Verpackungsmaterial gefertigten Folienbehälter bzw. Kavitäten einer Blisterverpackung dienen als pharmazeutische Verpackung unter anderem dazu, pharmazeutische Wirkstoffformulierungen vor Umwelteinflüssen zu schützen, die unter Umständen die pharmazeutische Qualität der Wirkstoffformulierung beeinflussen können. Einer der die Qualität bestimmenden Faktoren ist die auf den Wirkstoff einwirkende Feuchtigkeit, die einerseits durch Permeation von außen eindringen oder aus dem Verpackungsmaterial selbst stammen kann und aus dessen Innenwandung in die Kavität eintritt. Da die Blisterverpackung bestimmungsgemäß gegen Permeation von außen gut geschützt ist, kann in der Kavität vorhandene Feuchtigkeit auch nicht entweichen und daher zu einer Schädigung des Wirkstoffs führen. In solchen Fällen muss der Feuchtegehalt des Produkts vor der Verpackung sowie ggf. von Folien für die Herstellung von Blisterverpackungen daher kontrolliert und bei Bedarf durch Trocknung vermindert werden.

Eine Blisterverpackung für ein pharmazeutisches Produkt (z.B. Tablette, oder Kapsel) besteht in der Regel aus einer Deckfolie und einer Bodenfolie, wobei in der Bodenfolie die Kavitäten ausgebildet sind. Die Deckfolie und die Bodenfolie können aus einer oder mehreren Schichten verschiedener oder gleicher Materialien aufgebaut sein. Die Deckfolie wird mit der Bodenfolie z. B. durch Kleben, Schweißen oder Versiegeln abgedichtet verbunden. Die Deckfolie und/oder die Trägerfolie ist in der Regel als Metall- und/oder Kunststoff- und/oder Papierfolie ausgebildet. Diese Materialien können in mehreren Schichten vorhanden sein. Typische Metallfolien umfassen beispielsweise Aluminiumfolien und Aluminiumverbundfolien, die aus Aluminium und z.B. einem Kunststoff gefertigt sind. Als Material für die Kunststofffolien kann Polyvinylchlorid (PVC) CyCloolefin-Copolymer (COC), Polychlortrifluorethylen (PCTFE), Polyethylen (PE), Polypropylen (PP), Polyethylenterephthalat (PET), Polycarbonat (PC), Polyester (UP), Polyacrylat, Polyamid (PA) oder andere Kunststoffe verwendet werden. Häufig besteht ein Blister aus einer Deckfolie aus Aluminium, die die Bodenfolie zur Aufnahme des pharmazeutischen Produktes bzw. Wirkstoffes verschließt. Diese tiefgezogene Bodenfolie kann ebenfalls eine Aluminiumfolie umfassen, um den Eintritt von Wasser in die Kavität zur Aufnahme des pharmazeutischen Produktes zu verhindern. Zur Schaffung einer weiteren Diffusionsbarriere bzw. zur Erhöhung der mechanischen Stabilität des Blisters kann optional zumindest die Aluminiumfolie der Bodenfolie ein oder beidseitig mit weiteren Kunststoff- und/oder Papierfolien bedeckt sein.

Um somit eine ausreichende Produktstabilität des verpackten Produktes sicherzustellen ist es wichtig, die Wassermenge zu bestimmen, die während der Lager- und In-Use-Zeit des Produkts mittels Permeation in die Verpackung gelangt. Auf Basis der Permeationsrate des Packmittels ist es somit möglich, den Feuchteeintrag über die Lagerzeit berechnen zu können und damit die tatsächliche Einwirkung von Wasser auf das verpackte Produkt abzuschätzen.

Die Permeationsrate ist definiert als die Menge Wasser die bei einer gegebenen Temperatur pro Zeiteinheit bei einem Feuchtegradient von 100 % r.F. zwischen dem Äußeren und dem Inneren einer Verpackung ausgetauscht werden kann. Die Permeationsrate stellt dabei eine wichtige Größe zur Charakterisierung der Barriere- und damit Schutzwirkung der Verpackung dar. Besonders für Oralia und Inhalativa ist häufig eine Hochbarrierefolie nötig, um Wasserdampfpermeation hinreichend zu unterbinden und damit die Produktstabilität zu sichern. Die Permeationsrate liegt dann im Bereich von wenigen $\mu$g bis einigen hundert $\mu$g Wasserdampf pro Tag.

Aus dem Stand der Technik sind mehrere Methoden zur Bestimmung der Permeationsrate (qualitativ sowie quantitativ) bekannt. Z.B. kann mittels des Blaubad-Tests die Dichtigkeit einer Flasche festgestellt werden. Dabei kommen verschiedene Varianten zu Einsatz, deren Grundidee im Folgenden beschrieben wird. Eine leere und verschlossene Flasche wird in einem Exsikkator gefüllt mit Methylenblau gefärbtem Wasser so platziert, dass die Flasche vollständig mit Wasser bedeckt ist. Danach wir für eine gewisse Zeit ein Unterduck im Exsikkator erzeugt. Weist die Flasche keine groben Undichtigkeiten auf (Fall 1), wird das anschließende Belüften des Exsikkators keine Auswirkung auf die Flasche haben. Ist die Flasche jedoch undicht (Fall 2), so entsteht während der Phase, in der ein Unterdruck im Exsikkator besteht, in der Flasche ebenfalls ein Unterdruck, da Luft austritt. Beim anschließenden Belüften des Exsikkators wird dann Wasser in die Flasche gesogen. Schneidet man anschließend die Flasche am Boden auf, so sieht man im ersten Fall in der Flasche keine Flüssigkeit, im zweiten Fall hingegen einige Tröpfchen bis hin zu größeren Mengen blau gefärbtes Wasser. Im Fall 1 wird die Flasche als "dicht", im Fall 2 als "undicht" bewertet. Der Blaubad-Test spiegelt in mehrerlei Hinsicht nicht die reale Situation während der Lagerung der Flasche wieder, insbesondere was die Permeation von Wasserdampf betrifft. Zum einen wird im Blaubad-Test *flüssiges* Wasser verwendet, während in der Lagerphase die Flasche nur mit Wasser*dampf* in Kontakt kommt. Entscheidend für die Wasser-Permeationseigenschaften eines Materials sind seine Wechselwirkungen mit Wasser speziell in Dampfform. Zum anderen wird im Blaubad-Test zusätzlich ein Unterdruck von bis zu 500 mbar angelegt. Diese extremen Verhältnisse führen letztlich zu einer mechanischen Deformation der Flasche, wodurch die Vergleichbarkeit mit den Lagerungsbedingungen im realen Fall nicht mehr gegeben ist.

Weiterhin liefert der Blaubad-Test keine quantitative Aussage über die Permeationsrate, sondern lediglich das qualitative Kriterium "dicht" oder "undicht" wie oben definiert. Selbst eine im Blaubad-Test als "dicht" bewertete Flasche kann beispielsweise durch lokale Materialverjüngung eine so hohe Permeationsrate besitzen, dass das Produkt darin geschädigt wird. Darüber hinaus erlaubt der Blaubadtest keinerlei Aussage über die Dichtigkeit der Flasche bei verschiedenen Klimazonen.

Eine weitere Methode (im Folgenden auch als gravimetrische Methode bezeichnet) zur Bestimmung der Permeationsrate stellt ein Verfahren dar, welches eine Modifikation des Permeationstests ist, wie es in der USP-671 (US Pharmacopeia) beschrieben wird. Dazu wird in einer Verpackung (Blister oder Flasche) ein möglichst großes Wasserreservoir verpackt, wodurch sich eine relative Feuchte von rund 100 % r.F. einstellt. Danach wird die Flasche oder der Blister in einer sehr trockenen Umgebung (z.B. Glovebox oder in Exsickator mit Trockenmittel) bei einer bestimmten Temperatur gelagert. Bedingt durch die Partialdruckdifferenz diffundiert Wasserdampf aus der Verpackung in die Umgebung, wodurch der Blister oder die Flasche an Masse verliert. Diesen Masseverlust als Funktion der Lagerzeit kann mit Hilfe einer sehr genauen Analysenwaage aufgezeichnet werden. Durch geeignete Auswertung der Messdaten lässt sich die Permeationsrate berechnen. Einer der entscheidenden Nachteile dieser Methode ist die lange Messzeit. Beispielsweise hat ein Polymer-Blister mit dem Hochbarrierematerial Aclar® eine sehr geringe Permeationsrate. Bedingt dadurch ist der Massenverlust des Blisters pro Zeiteinheit sehr gering. Um nun die Permeationsrate mit hinreichender Genauigkeit zu bestimmen, sind sehr lange Messzeiten (bis zu 100 Tagen) nötig. Diese Methode ist zwar sehr genau, aber nicht geeignet, wenn eine Permeationsrate gering ist und/oder schnell bestimmt werden soll. Damit ist selbst der modifizierte USP-671-Test insbesondere zur Überprüfung der Permeation von Hochbarriereverpackungen für empfindliche Produkte nicht hinreichend geeignet.

Beim USP-671-Test selbst wird die Permeationsrate nach 14 Tagen bestimmt, was für eine "In-Prozess-Kontrolle" (IPC) zu langwierig ist und für Entwicklungszwecke nicht die nötige Genauigkeit liefert. Es sei hervorgehoben, dass selbst diese lange Messzeit für einige Verpackungssysteme, z.B. auf Basis von PVdC-Material noch zu schnell sind, da in dieser Zeit dieses Material je nach Messtemperatur gerade auf Umgebungsbedingungen relaxiert ist und der eigentliche unverfälschte Permeationsprozess danach erst in Gang kommt. Eine weitere Methode zur Bestimmung der Permeationsrate basiert auf der direkten Messung der Spurenfeuchte (siehe auch: "Trace moisture measurement with quartz crystal microbalance Technology", VDI-Berichte [0083-5560], Autor: G. van Haltern; Jahr: 2003, Band: 1784; Seite: 81-86). Bei der Spurenfeuchte-Methode wird die feuchtebeladene Probe analog wie bei der gravimetrischen Methode hergestellt. Die Probe wird dann in einen Messraum gebracht, der mit einem trockenen Stickstoff-Strom durchflutet wird. Nachdem anhaftendes Wasser an der Oberfläche der Messkammer und der Probe abgedampft ist, transportiert der Stickstoff nur noch das Wasser, welches durch Permeation aus der Probe ausgetreten ist. Diesen Stickstofffluss mit Wasserdampf kann man mit einem sehr feuchtempfindlichen Detektor untersuchen und dadurch die Permeationsrate bestimmen. Diese Methode ist sehr genau. Nachteilig ist jedoch, dass die Probenvorbereitung, die Kalibration des Detektors, sowie die Auswertung der Messkurven sehr aufwendig sind. Bei sehr kleinen Permeationsraten müssen eine Vielzahl von Proben bereitgestellt werden, um eine genügend hohe Wasserdampfkonzentration im Stickstofffluss sicherzustellen. Darüber hinaus treten bei bestimmten Vielschicht-Hochbarrierematerialien (beispielsweise PVC-PVdC-Folien) sehr lange und zudem schichtdickenabhängige Relaxationszeiten auf (ca. 14 Tage), bevor der für eine Permeationsmessung erforderliche Gleichgewichtszustand erreicht ist.

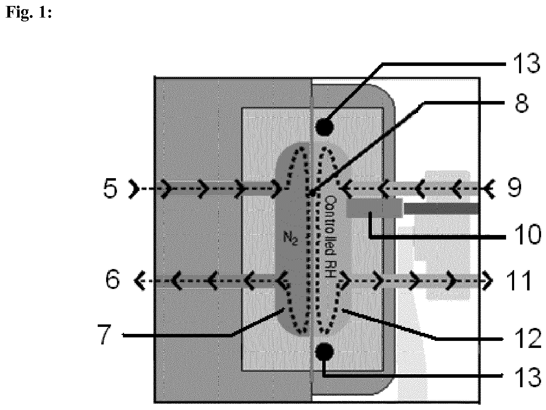

Eine weitere Methode (Mocon-Messung) zur Bestimmung der Permeationsrate basiert auf einem Verfahren, für welches das Permeationsmessgerät der Firma Mocon (in Deutschland vertreten durch die Firma Lippke: PAUL LIPPKE HANDELS-GMBH, Industriegebiet Friedrichshof, Carl-Borgward-Straße 10, D-56566 Neuwied, GERMANY) eingesetzt wird. Mit Hilfe dieses Verfahrens kann die Permeationsrate einer flachen Folie im TemperaturBereich von 10 - 40 °C gemessen werden. Der schematische Aufbau ist in Abbildung 1 (Schematischer Aufbau eines Permeationsmessgeräts (Permatran-W®3/33) der Fa. Lippke zur Bestimmung der Transmissionsrate einer flachen Folie) dargestellt. Dazu wird die zu untersuchende flache Folie (8) unter hohem mechanischem Druck sehr dicht in die Apparatur eingespannt, (13) stellen hierbei Dichtungsringe (O-Ringe) dar, welche die Messkammerhälften (7) und (12) zu der Folie (8) abdichten. Auf der einen Seite wird mit trockenem Stickstoff gespült (die Kennziffer (5) stellt den Einlass für den trockenen Stickstoffstrom und (6) stellt den Auslass für den an der Folie vorbeigeführten Stickstoffstrom dar) und auf der anderen Seite (entspricht Messkammerhälfte (12)) wird eine relative Luftfeuchte von 100 % erzeugt (wahlweise können auch Luftfeuchten im Bereich 35-90 % r.F. generiert werden), wobei (9) den Einlass für den befeuchteten Gasstrom und (11) den Auslass darstellt, sowie (10) einen Sensor zur Kontrolle der Luftfeuchte in Messkammerhälfte (12). Die Fläche und die Dicke der Folie sind in der Regel bekannt. Bedingt durch den Partialdruckunterschied auf beiden Seiten diffundiert Wasserdampf durch die Folie und wird durch den Stickstoff aufgenommen. Der Stickstoff, der an der Folie vorbeigeführt wurde (Auslass (6)) wird dann zu einem Feuchte-Detektor transportiert und kann dann ähnlich wie bei der Spurenfeuchtemessung in einem Gas detektiert werden (siehe: "Trace moisture measurement with quartz crystal microbalance Technology", VDI-Berichte [0083-5560], Autor: G. van Haltern; Jahr: 2003, Band: 1784; Seite: 81-86). Das Ergebnis stellt die Transmissionsrate der Folie bei einer bestimmten Temperatur dar. Nachteilig ist dabei, dass nur bei bekannter Dicke und Fläche der Folie von der Transmissionsrate auf den Permeationskoeffizient geschlossen werden kann. Damit wird eine quantitative Bestimmung der Permeationsrate bei tief gezogener Blisterfolie bzw. Flaschen und anderen geformten Verpackungen sehr schwierig, da dort die Wanddicken variieren. Die Kalibrierung des Messgeräts und die Probenvorbereitung sind sehr aufwendig. Aufgrund von intrinsischen Eigenschaften der verschiedenen Folienmaterialien müssen bestimmte Messzeiten eingestellt werden. Die oben beschriebenen sehr langen und schichtdickenabhängigen Relaxationszeiten bei bestimmten Vielschicht-Hochbarrierematerialien (beispielsweise PVC-PVdC-Folien) sind auch hier bestimmend. Somit stellt auch diese Methode keine schnelle, mit vertretbarem Aufwand anwendbare, hinreichend genaue und zuverlässige Methode zur Bestimmung der Permeationsrate dar. Zudem erhält man das notwendige Hintergrundwissen um die Folieneigenschaften nur in Kombination mit einer DVS - Waage.

Eine DVS-Waage (Dynamic Vapour Sorption-Waage) wird vor allem zur Messung der Sorptions- und Diffusionseigenschaften von Festkörpern und Pulvern verwendet. Bei der DVS-Waage handelt es sich um eine sehr empfindliche Balkenwaage (beispielsweise hergestellt von der Fa. Surface Measurement Systems (SMS)). Am Balken hängen auf einer Seite ein Referenzschälchen und auf der anderen Seite ein Probenschälchen. Der symmetrische Aufbau ist nötig, um eine Verfälschung der Massenbestimmung durch den Auftrieb im feuchtebeladenen Gasstrom zu verhindern. Die Seite mit dem Probenschälchen wird mit einer Probe (z.B. PVC-Folie) bestückt und darüber wird ein Stickstoffstrom mit definiertem Wasserdampfgehalt (0-98 % r.F. mit einer Genauigkeit von 1,5 % r.F.), bei einer konstanten Temperatur im Bereich 10-40 °C, geleitet. Somit ist es möglich, die Massenänderung als Funktion der Messzeit bei einer definierten Temperatur und einer einstellbaren und konstant gehaltenen rel. Feuchte im Stickstoffstrom zu untersuchen. Man erhält die sogenannte Sorptionsisotherme und berechnet daraus die Diffusionskonstante jeweils als Funktion der relativen Feuchte. Das Produkt aus beiden Messgrößen ist der Permeationskoeffizient. Nachteilig ist, dass die Probenvorbereitung, die Messungen, sowie deren Interpretation sehr zeitaufwendig sind und ein geschultes und sehr erfahrenes Personal erfordern. Auch sind DVS-Waagen sehr empfindlich, so dass selbst moderne Geräte auf eine maximale Probenmasse von ca. 1g beschränkt sind. Deshalb können höchstens einzelne Blisterkavitäten untersucht werden, nicht jedoch ganze Blisterkarten, Flaschen und andere größere Verpackungen. Aus DVS-Messungen kann man gleichzeitig sowohl die Sorptionskapazität als auch die Sorptionskinetik bestimmen. Letztere ist z.B. wichtig, um bei Mocon-Messungen die benötigte Relaxationszeit abzuschätzen/einzustellen.

Die US 4 952 882 A sowie die EP 0 259 110 A2 offenbaren Vorrichtungen und Verfahren sowie deren Verwendung zur Bestimmung der mittleren Schichtdicke mittels kapazitiver Messungen.

Es stellt sich somit die Aufgabe, eine hinreichend schnelle, einfache, genaue und zuverlässige Methode zur Bestimmung der mittleren Schichtdicke von Test- bzw. Marktverpackungen zur Verfügung zu stellen. Insbesondere in der Produktion (Verpackung von Arzneimitteln) als schnelle Inprozesskontrolle, aber auch im Rahmen der Verpackungs-, sowie Prozessentwicklung einer Verpackung eines Arzneimittels ist die Bereitstellung einer solchen Methode ein großer Fortschritt zur Sicherstellung der Produktqualität.

Überraschenderweise wird die Aufgabe durch das erfindungsgemäße Verfahren zur Bestimmung der mittleren Schichtdicke mittels einer kapazitiven Messung des Werkstücks (Verpackungsmaterial bzw. Verpackungseinheit) bei bekannter materialspezifischer relative Dielektrizitätszahl $\varepsilon_r$ sowie bekannter Fläche A gelöst.

Es gilt hierbei die Ficksche Diffusionsgleichung, die für ein lineares System mit Ortskoordinate x und konstantem Diffusionskoeffizienten D folgendermaßen geschrieben werden kann:

$$F = -D \frac{\partial C}{\partial x} \, ,$$

wobei F die Transmissionsrate pro Flächeneinheit *A* und *C* die Konzentration der diffundierenden Substanz ist. Daraus errechnet sich beispielsweise für eine Folie der Dicke $\ell$ in einem Mocon-Gerät die Transmissionsrate aus der Differenz der Wasserdampfkonzentrationen $C_1$ und $C_2$ auf beiden Seiten und es ergibt sich nach einer hinreichend langen Zeit ein Gleichgewichtszustand

$$F = D \frac{C_1 - C_2}{\ell} \, .$$

Bei der Betrachtung von Wasserdampf ist (im Gegensatz zu Sauerstoff als stabilitätsbegrenzender Faktor für die Arzneimittelformulierung) die Konzentration nicht einfach bestimmbar, jedoch der Partialdruck *p*. Unter der Annahme, dass der Diffusionskoeffizient konstant, und die Sorptionsisotherme des Materials linear ist, gilt das sog. Henrysche Gesetzt:

$$C = Sp \, ,$$

wobei die Proportionalitätskonstante $S$ die Löslichkeit von Wasserdampf im Material beschreibt.

Unter Verwendung der idealen Gasgleichung

$$P_0 V = \frac{m}{M_{H_2O}} RT$$

mit der universellen Gaskonstante $R$, der Temperatur $T$, der molaren Masse von Wasser $M_{H2O}$, dem Gesamtdruck $P_0$, dem Volumen $V$ und dem Zusammenhang $F = \dot{V}/A$, ergibt sich folgende Gleichung für die zeitliche Massenveränderung (Permeationsrate $\dot{m}$)

$$\dot{m} = P \frac{A}{\ell} \Delta P_{H_2O} \frac{M_{H_2O} \, P_0}{RT} \qquad (1).$$

Die Materialeigenschaften des Packmittels spiegeln sich im Permeationskoeffizienten $P = D \cdot S$ wieder. Mit der Formel (1) lässt sich somit die Permeationsrate einer flachen Folie bestimmen, wenn das Verhältnis Fläche zu Dicke bekannt ist. Für Standardmaterialien ist der Permeationskoeffizient als Materialgröße gegebenenfalls bekannt durch den einschlägigen Stand der Technik. Sofern für ein spezielles Material diese Größe nicht bekannt ist und/oder die spezielle Materialgröße durch den Stand der Technik in nicht ausreichender Genauigkeit bekannt ist, oder aber beispielsweise die Permeationseigenschaften tief gezogener Folien nicht bekannt sind, ist es möglich, den Permeationskoeffizient aus der Transmissionsrate abzuschätzen, sofern die Transmissionsrate bekannt ist.

Die hier vorgeschlagene Methode zur Bestimmung der Permeationsrate $\dot{m}$ eines Verpackungssystems beruht auf der Messung des entscheidenden Verhältnisses zwischen Fläche einer Verpackungseinheit $A$ und der dazugehörigen Dicke $\ell$ des Verpackungsmaterials. Somit gilt $A/\ell$, als dem bestimmendem Maß für die Permeationsrate. Das integrale Verhältnis $A/\ell$ wird dabei mit Hilfe der dielektrischen Eigenschaften des Materials kapazitiv bestimmt.

Es ist bekannt, dass die Kapazität $C$ eines Plattenkondensators anhand folgender Formel berechnet werden kann:

$$C = \varepsilon_r \varepsilon_0 \frac{A}{\ell} \qquad (2).$$

Hierbei gilt, dass die Fläche der Platten $A$, der Plattenabstand $\ell$ ist und zwischen den Platten sich ein Dielektrikum mit der relativen Dielektrizitätszahl $\varepsilon_r$ befindet. Die Kapazität $C$ des Kondensators ist somit bestimmt durch die Dielektrizitätskonstante des Vakuums $\varepsilon_0$, durch die frequenzabhängige materialspezifische relative Dielektrizitätszahl $\varepsilon_r$ sowie gerade durch das Verhältnis $A/\ell$. Da die Permeationsrate $\dot{m}$ direkt proportional zu $A/\ell$ ist, lässt sich aus einer Messung der Kapazität einer Verpackung auf die Permeationsrate $\dot{m}$ schließen. Es gilt

$$\dot{m} \sim \frac{A}{\ell} \sim C \qquad (3).$$

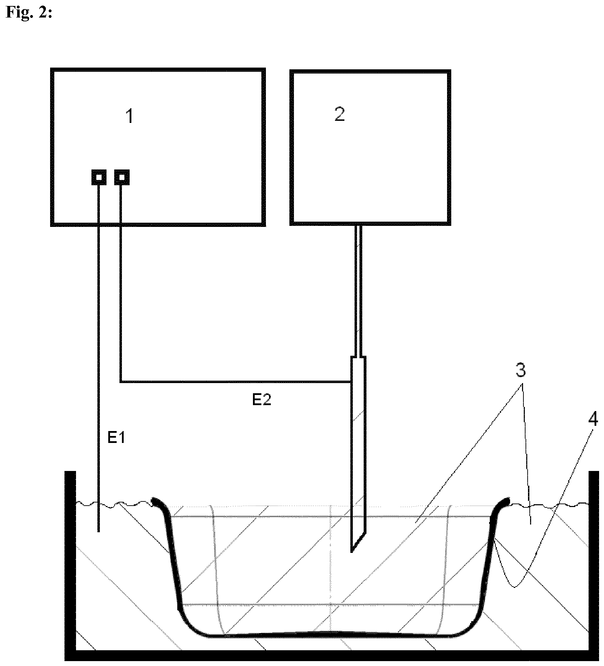

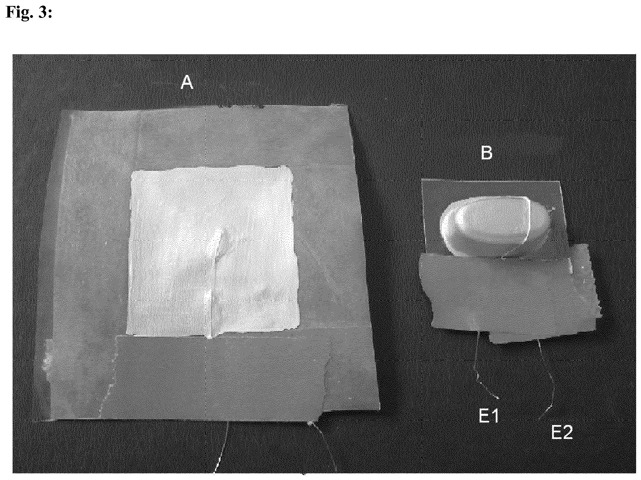

Erfindungsgemäß können mit einer spezifischen Messanordnung/Vorrichtung die mittlere Schichtdicke eines Packmittels bestimmt werden. Beispielhaft ist der Aufbau einer derartigen Vorrichtung in Figur 2 sowie die experimentelle Realisierung in Figur 3 dargestellt. Die zu untersuchende Verpackung an den gegenüberliegenden Außenflächen wird mit Elektroden versehen. Dies kann beispielsweise dadurch realisiert werden, dass eine Verpackungskomponente, z.B. Blisternapf (4) in ein Bad einer leitfähigen Flüssigkeit (3) positioniert wird, wobei die Innenausformung (entspricht der gegenüberliegenden Oberfläche zur Außenseite des Blisternapfs) ebenfalls mit einer leitfähigen Flüssigkeit (3) gefüllt wird (siehe Fig. 2). Alternativ kann die Oberfläche des zu untersuchenden Packmittels auch mit einer leitfähigen Schicht überzogen werden und direkt an die Elektroden (E1) und (E2) angeschlossen werden (siehe Fig.3, links: Kalibrationsfolie mit Leitfähigkeitsbeschichtung und Elektrodendrähten (A); rechts: Blister mit Leitsilber (B) und Elektroden (E1) und (E2)). Die mit dieser Vorrichtung gemessene Kapazität ist ein Maß für das integrale Verhältnis von $A/\ell$ und erlaubt somit Rückschlüsse auf die Permeationsrate zu schließen. Die in Abb. 2 gezeigt Messanordnung ist aber nicht auf Blister beschränkt, auch Flaschen und/oder andere Verpackungssysteme können auf diese Art untersucht werden.

Eine Messanordnung gemäß Fig. 2 erlaubt es, neben dem Vermessen des kompletten Blisters auch einzelne Bereiche desselben untersucht werden können. In dieser speziellen Ausführung ist die Elektrode E2 derart zu modifizieren, dass diese elektrischen Kontakt nur zu einem Teilbereich der inneren Oberfläche hat. Dies kann beispielsweise dadurch erreicht werden, dass die Zugabe einer elektrisch leitenden Flüssigkeit aus einer Abfüllstation (2) ausschließlich in einer geringen Menge erfolgt, so dass nur ein Teilbereich, z.B. Boden des Blisternapfs mit der elektrisch leitenden Flüssigkeit gefüllt ist. Damit ist es möglich, die Kapazität und letztlich das Verhältnis $A/\ell$ als Funktion der Füllhöhe zu bestimmen. Mit dieser speziellen Ausführungsform der hier vorgeschlagenen Methode bzw. Vorrichtung ist es möglich, für die Blisterentwicklung die Kavität eines einzelnen Blisternapfs oder der Bodenwölbung einer Packmittelflasche ortsaufgelöst zu untersuchen, um so den Herstellprozess zu optimieren. Analog kann mit allen zu untersuchenden Packmittelkomponenten vorgegangen werden, indem die leitfähigen Flächen, die mit den Elektroden E1 und E2 verbunden sind, auf die zu untersuchende Fläche der Packmittelkomponente begrenzt werden. Damit ist es möglich, Verpackungen schnell und hinreichend genau ortsaufgelöst hinsichtlich ihrer Materialstärke zu untersuchen. Eine ortsaufgelöste Messung der mittleren Schichtdicke von geformten Packmittelkomponenten (z.B. Blisternapf, Flaschenboden) zur Abschätzung der Permeationsrate eines Packmittels erweist sich als vorteilhaft, um die Form einer Blisterkavität oder im Rahmen der Minimierung der Größe von Blisterkarten, sowie der Auswahl der Stempel, Optimierung des Tiefziehprozesses im Rahmen der Entwicklung eines Tiefziehprozesses eines Blisters zu optimieren. Im speziellen sollte bei der Durchführung der Methode sichergestellt sein, dass die Elektroden den Bereich der Verpackung bedecken, der zur Permeation beiträgt sowie dass die elektrisch leitfähige Flüssigkeit eine gute Bedeckung der Oberfläche aufweist, beispielsweise durch Zugabe eines Mittels (z.B. eines Tensids) zur Verringerung der Oberflächenspannung. Als Kapazitätsmessgerät eignet sich z.B. ein Messgerät der Firma HP, Modell 4274A Multi - Frequency LCR Meter. Dieses Messgerät hat den Vorteil, dass nicht nur DC-Felder angelegt werden können, sondern die Kapazität auch bei verschiedenen Frequenzen gemessen werden kann.

Die Aufgabe der Erfindung wird somit durch ein Verfahren gemäß Anspruch 1 gelöst.

In einer weiteren speziellen Ausführungsform sind die Messkammerhälften mit einer elektrisch leitfähige Flüssigkeit gefüllt, so dass die gegenüberliegenden Oberflächen des Verpackungsmaterials, zwischen denen die mittlere Schichtdicke bestimmt werden soll, elektrisch leitfähig mit den Elektrodenanschlüssen verbunden sind.

Erfindungsgemäß wird unter einer kapazitiven Bestimmung die Messung der elektrischen Kapazität einer Probe (im speziellen Verpackungsmaterial) verstanden. Erfindungsgemäß gleichbedeutend sind für die Ausführbarkeit und den Schutzumfang der vorliegenden Erfindung die Begrifflichkeiten "Verpackungsmaterial", "flächiges Verpackungsmaterial", "Verpackungskomponente", "flächenförmige Packmittelkomponente". Unter einer Kalibrierfolie wird ein Rohpackmittel verstanden, welches hinsichtlich der Form nicht dem jeweiligen Erfordernis des Verpackungszwecks angepasst ist. Das heißt, dass beispielsweise die Folie, aus der ein Blister geformt werden soll, als Kalibrierfolie nicht tiefgezogen vorliegt, sondern beispielsweise als Rollenware. In vergleichbarer Art und Weise kann als Kalibrierfolie auch ein flächiger Formkörper mit bekannter Dicke und Fläche angesehen werden, der aus dem Rohmaterial (z.B. Kunststoffgranulat) hergestellt werden kann, aus dem auch die geformten Verpackungskomponenten (z.B. Packmittelflasche) hergestellt wird.

Das erfindungsgemäße, vorgeschlagene Verfahren zur Bestimmung der mittleren Schichtdicke eines Packmittels ist dabei geeignet für Packmittel, im speziellen flächenförmige Packmittelkomponenten, sowie Blisterfolien, tiefgezogene Blisterfolien, Arzneimittelflaschem, Teile von Arzneimittelflaschen, die hinsichtlich des Gradienten, der die Schichtdicke beschreibt, keine oder sehr geringe / vernachlässigbare elektrische Leitfähigkeit aufweist. Im speziellen ist das Verfahren für beliebige elektrisch nicht oder sehr gering leitfähige Verpackungen geeignet, die in die Vorrichtung eingelegt / eingespannt werden können.

Im Einzelnen zeigt Fig. 2 einen Versuchsaufbau zur Bestimmung der Permeationsrate eines Polymer-Blisters, wobei (1) das Kapazitätsmessgerät, (2) die Abfüllstation für die elektrisch leitfähige Flüssigkeit, (E1) die Elektrode 1, (E2) die Elektrode 2, (3) die elektrisch leitfähige Flüssigkeit und (4) das zu vermessende Werkstück (Packmittelkomponente, z.B. Blisternapf) darstellt.

Fig. 3 zeigt auf der linken Seite eine mit Leitsilber kontaktierte Kalibrationsfolie (A) und auf der rechten Seite eine Blister-Kavität (B) mit den Elektroden (E1) und (E2).

Die vorliegende Erfindung umfasst in einer weiteren Ausführungsform eine mobil einsetzbare Vorrichtung zur schnellen Bestimmung der mittleren Schichtdicke sowie der Permeationsrate an einem beliebigen Verpackungssystem. Eine derartige Vorrichtung ist geeignet für die Messung der mittleren Schichtdicke sowie der Permeationsrate eines beliebigen flächigen Werkstück eines Verpackungssystems z.B. einer tiefgezogenen Bodenfolie einer Blisterkarte oder der Deckfolie einer Blisterkarte.

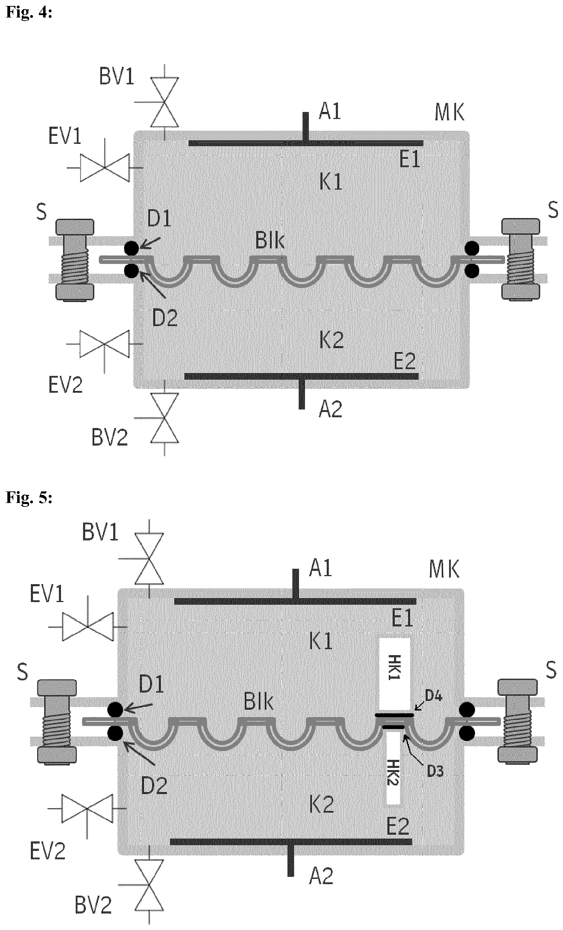

Fig. 4 zeigt den schematischen Aufbau einer solchen weiteren Ausführungsform der Vorrichtung, die aus einer Messkammer (MK), die aus 2 Messkammerhälften besteht, zwischen welchen das zu vermessende Werkstück (flächige Packmittelkomponente bzw. flächiges Verpackungsmaterial oder Packmittelflasche) eingespannt ist und die eine Vorrichtung zur Messung des spezifischen Oberflächen/ Dickenverhältnisses $A/\ell$ und zur Bestimmung der Permeationsrate einer Blisterkarte darstellt.

Die in Fig. 4 aufgeführten Ziffern bedeuten:

| | |
|---|---|
| Blk: | zu vermessende Werkstück z.B. Blisterkarte (oder flächige Verpackungskomponente oder flächiges Verpackungsmaterial) |
| MK: | Messkammer |
| KI, K2: | Messkammerhälften 1 und 2 |
| S: | Schraubverschluss (alternativ Klammer oder Schnellverschluss) |
| D1, D2: | Umlaufdichtungen 1 und 2 |
| EV1, EV2: | Einfüllventile 1 und 2 |
| BV1, BV2: | Belüftungsventile 1 und 2 |
| E1, E2: | Elektrode 1 und 2 |
| A1, A2: | elektrische Anschlüsse für die kapazitive Messung |

Eine spezielle Vorrichtung zur Bestimmung der mittleren Schichtdicke sowie der Permeationsrate an einem beliebigen Verpackungssystem im besonderen für eine flächige Komponente des Packmittels umfasst eine Messkammer (MK), die aus 2 Messkammerhälften besteht. Die beiden Messkammerhälften sind dabei becherförmig ausgestaltet und werden über eine Verschraubung (S) so zusammengefügt, dass sie einen Hohlraum umschließen. Zwischen diesen beiden Messkammerhälften wird eine flächige Verpackungskomponente, z.B. eine Blisterkarte (Blk) eingelegt, die mittels der Umlaufdichtungen (D1) und (D2) ringförmig die beiden Messkammerhälften zu der eingelegten flächigen Verpackungskomponente (Blk) abdichtet. Nach Einlegen der flächigen Verpackungskomponente (Blk) kann die Messkammer mittels der Schrauben (S) dicht verschlossen werden, so dass zwei einzelne, getrennte Kammern (K1) und (K2) gebildet werden. Durch die Befüllungsventile (BV1) und (BV2) werden die beiden räumlich voneinander getrennten Messkammerhälften (K1) und (K2) mit einer elektrisch leitfähigen Flüssigkeit befüllt. Gleichzeitig werden die Messkammerhälften (K1) und (K2) über die Entlüftungsventile (EV1) und (EV2) vollständig, d.h. frei von Gasbläschen, entlüftet. (K1) und (K2) können gleichzeitig oder nacheinander befüllt werden. Die kapazitive Messung kann über die elektrischen Anschlüsse (A1) und (A2) und die Elektroden (E1) und (E2) erfolgen. Zur Minimierung von Fehlern ist es bei der Messung besonders wichtig, dass keinerlei Gasblasen auf der Oberfläche der Verpackung auftreten.

In einer bevorzugten Variante kann die Entgasung der beiden messkammerhälften mit Hilfe von Ultraschall beschleunigt werden indem bei der Befüllung der Messkammerhälften auf die elektrisch leitfähige Lösung kurzzeitig Ultraschall einwirkt; in einer weiteren Variante kann die Entgasung durch kurzzeitiges Anlegen von Unterdruck nach Befüllung der Messkammerhälften erfolgen. In einer Variante kann die vollständige Benetzung bzw. Abwesenheit von Gasblasen auf der Verpackungsoberfläche durch einen Zusatz von Oberflächenspannung senkenden Mitteln, beispielsweise Tensiden, in der elektrisch leitfähigen Flüssigkeit erfolgen.

Darüber hinaus kann vor der Messung die hinreichende Entgasung der Flüssigkeit gezielt überprüft werden, beispielsweise durch Anlegen einer schnell oszillierenden Volumenänderung über eines der Ventile und gleichzeitiger Messung des Druckprofils über dasselbe oder aber ein anderes Ventil. Alle weiteren Ventile bleiben dabei geschlossen. Wegen der hohen Kompressibilität von eventuell vorhandenen Gasblasen schwankt das Druckprofil von nicht hinreichend entgastem leitfähigem Medium geringer als das von hinreichend entgastem. Dadurch kann der erforderliche Entgasungszustands des Mediums sicher gestellt werden.

Als elektrisch leitfähige Flüssigkeit kann beispielsweise eine Salzlösung verwendet werden (z.B. eine Kochsalzlösung). In einer Variante kann die elektrisch leitfähige Flüssigkeit ein Elektrolyt sein. In einer weiteren Variante kann die elektrisch leitfähige Flüssigkeit eine Suspension sein. In einer weiteren speziellen Variante kann die elektrisch leitfähige Flüssigkeit durch ein leitfähiges Pulver ersetzt werden.

Eine weitere Ausführungsform der Vorrichtung zur Bestimmung der mittleren Schichtdicke sowie der Permeationsrate an einem beliebigen Verpackungssystem im besonderen für eine flächige Komponente des Packmittels umfasst, die es ermöglicht, dass ausschließlich ein Teilbereich der flächigen Komponente des Packmittels zur Vermessung der der mittleren Schichtdicke sowie der Permeationsrate eines Packmittels vermessen wird. Diese Ausführungsform ist somit geeignet zur Messung von Teilen von Blisterkarten, speziell zur Selektion der tief gezogenen Kavitätenflächen selbst. Sie ermöglicht eine noch genauere Untersuchung der qualitätskritischen tief gezogenen Bereiche.

In Fig. 5 ist diese spezielle, weitere Ausführungsform beispielhaft abgebildet. Die in Fig. 5 aufgeführten Ziffern bedeuten:

| | |
|---|---|
| Blk: | zu vermessende Werkstück z.B. Blisterkarte (oder flächige Verpackungskomponente oder flächiges Verpackungsmaterial) |

MK:            Messkammer
K1, K2:       Messkammerhälften 1 und 2
S:             Schraubverschluss (alternativ Klammer oder Schnellverschluss)
D1, D2:       Umlaufdichtungen 1 und 2
EV1, EV2:     Einfüllventile 1 und 2
BV1, BV2:     Belüftungsventile 1 und 2
E1, E2:       Elektrode 1 und 2
A1, A2:       elektrische Anschlüsse für die kapazitive Messung
HK1, HK2:     Hohlkörper 1 und 2, belegt mit Umlaufdichtungen D3 und D4
D3, D4:       Umlaufdichtungen 3 und 4

In dieser - gemäß Fig. 5 skizzierten - speziellen Ausführungsform können alle nicht tief gezogenen Bereiche durch Hohlkörper (HK1, HK2, sowie weitere Hohlkörper - nicht abgebildet) abgedeckt und mit den Dichtungen D3 und D4 (weitere Umlaufdichtungen für weitere Hohlkörper) abgedichtet werden. Dies bewirkt, dass die abgedeckten Teilbereiche nicht mit leitfähiger Lösung benetzt werden und damit zur kapazitiven Messung keinen Beitrag leisten. Damit wird erreicht, dass Teile der Blisterkarte von der Messung ausgeschlossen und damit die Messung gezielt auf Bereiche, beispielsweise besonders kritische Stellen, konzentriert werden kann. Die Messung wird dadurch empfindlicher und ortsaufgelöst selektiver.

Die oben oder unten beschriebene Vorrichtung zur Bestimmung der mittleren Schichtdicke sowie der Permeationsrate eines Packmittels kann dabei hinsichtlich der Größe des zu vermessenden Objekts (flächenförmige Packmittelkomponente) in einer bevorzugten Variante derart ausgestaltet sein, dass ausschließlich ein einziger Blisternapf eines Blisters zwischen die Messkammerhälften eingelegt und vermessen werden kann.

Die Vorrichtung ist im speziellen dafür geeignet, die mittlere Schichtdicke, sowie die Permeationsrate von Verpackungen bestehend aus Verbundmaterialien, von welchen einzelne Komponenten elektrisch leitfähig sind, beispielsweise aluminiumbasierte Blister, zu bestimmen. Hierbei wird das leitfähige Material gleichzeitig als Elektrode für die kapazitive Messung verwendet.

In einer weiteren bevorzugten Ausführungsform besteht die Messkammer der Vorrichtung aus einem durchsichtigen Material, beispielsweise Glas, angefertigt, um sicher stellen zu können, dass auf der Oberfläche der Verpackung bei der Messung keinerlei Gasblasen auftreten. Beispielsweise können die Messkammerhälften aus einem durchsichtigen oder teildurchsichtigen Kunststoff bestehen. Dies kann beispielsweise PVC, Acryl oder PET sein. In einer weiteren Variante können die Messkammerhälften aus schlag- und kratzfesten und/oder elektrolytresistenten Kunststoffen bestehen.

In der oben beschriebenen Messanordnung / Vorrichtung werden die Messungen / das Verfahren bei konstanter Temperatur, vorzugsweise bei Raumtemperatur durchgeführt. In einer Variante können Messungen zur Erhöhung der Genauigkeit gezielt bei anderen Temperaturen durchgeführt werden. Dies wird bestimmt durch die dielektrischen Eigenschaften der zu untersuchenden Barrierematerialien sowie durch die elektrischen Leitfähigkeitseigenschaften der leitfähigen Flüssigkeit in den Messkammerhälften.

Umfasst ist auch ein Verfahren, welches im Rahmen eines ersten Schrittes eine detaillierte Messung der Permeationsrate einer Verpackungskomponente / einer Verpackung mit einer Methode aus dem Stand der Technik (z.B. gravimetrisch) und vergleichender Messung auf Basis der kapazitiven Bestimmung von $A/\ell$ gemäß der vorliegenden Erfindung durchgeführt wird, sowie in einem zweiten Schritt durch ausschließliche Messung von $A/\ell$ von weiteren Packmittelkomponenten im Rahmen beispielsweiser einer In-Prozess-Kontrolle eine Bewertung der Permeationsrate der Packmittelkomponenten, die den Produktionsprozess entsprechen, vorgenommen werden kann. Die Messungen des Schrittes 1 können dabei im Rahmen der Entwicklung eines Verpackungssystems einmalig erhoben werden und dienen im gesamten Life Cycle des Verpackungssystems als Bezugsmessung für Messungen gemäß dem zweiten Schritt als Referenz-Datensatz. Das Verfahren umfasst einem Teilschritt 1, der die Feststellung des Zusammenhangs zwischen Kapazitätsmessung gemäß Verfahrens und der absoluten Permeationsrate auf Basis einer Methode nach dem Stand der Technik ermöglicht (und einer Eichung/Kalibrierung der Methode entspricht) und einem zweiten Schritt, bei dem weitere Werkteile derselben Art von Packmittelkomponenten, wie sie im Rahmen des Schrittes 1 verwendet wurden, untersucht werden können (Anwendung des Verfahrens als In-Prozess-Kontrolle durch Auswertung der Messungen gemäß Schritt 2 und Vergleich des hinterlegten Zusammenhangs zwischen Kapazität und Permeationsrate entsprechend der Messungen des Schritts 1). Dieses Verfahren umfasst den Schritt 1 und 2 ist somit auch anwendbar wenn die Permeationskonstante des Verpackungsmaterials nicht bekannt ist. Beispielsweise ist folgender Verfahrensablauf damit möglich: Die Permeationsrate wird in einem ersten Versuch (z.B. Gravimetrisch mit Analysenwaage analog USP671) bestimmt. Vergleichend dazu wird eine kapazitiven Bestimmung von $A/\ell$ gemäß der vorliegenden Erfindung der zu untersuchenden Packmittelkomponente durchgeführt. Damit hat man eine Verknüpfung (Kalibrierung) von Kapazität mit Permeationsrate (Schritt 1). Anschließend kann im Rahmen eines Produktionsprozesses der Verpackung / Verpackungseinheit / Packmittelkomponenten die Kapazität von Verpackungseinheiten (als Stichprobenkontrolle als auch als 100% Kontrolle) nach dem

Verfahren gemessen werden. Fallen nun bei der Routine-Produktion Verpackungseinheiten (oder Verpackung oder Verpackungskomponente) auf, deren Kapazität signifikant von den hinterlegten Werten der Kalibrationsmuster abweichen, so ist dies ein schneller, direkter und sehr aussagekräftiger Hinweis auf einen möglicherweise qualitätsrelevante Abweichung bei Produktion der Verpackung / Verpackungseinheit / Verpackungskomponente.

Darüber hinaus kann diese Methode zur Optimierung, Sicherstellung und Kontrolle der Verpackungsqualität auch angewandt werden bei der Optimierung bzw. der Bestätigung der erfolgreichen Wiedereinstellung der Maschinenbzw. Werkzeugwechsel, Stempelverschleiß, Stempelwechsel, nach Wartungsarbeiten, qualitätsrelevanten Maschinenstillständen (z.B. verbunden mit Temperaturwechseln)

In einer Weiteren Anwendung kann diese Methode auch zur Optimierung, Sicherstellung und Kontrolle der Verpackungsqualität angewandt werden bei Abnahme bzw. bei Inbetriebnahmeschritten einer neu angeschafften Verpackungsmaschine bzw. nach einem Umzug oder anderen Modifikationen, oder bei einer Veränderung der Taktzahl in der Produktion.

Neben der oben beschriebenen vergleichenden Methode ist es möglich, bei Kenntnis des Permeationskoeffizienten eines Verpackungs-Rohmaterials (z.B. plane Folie) und der relativen Dielektrizitätszahl $\varepsilon_r$ direkt auf Permeationsrate der Verpackung zu schließen. Dies ist möglich, indem eine Referenzfolie (im Folgenden auch Kalibierfolie) bekannter Dicke und Fläche untersucht wird. $\varepsilon_r$ ergibt sich dann aus

$$\varepsilon_r = \frac{1}{\varepsilon_0} \cdot C \cdot \frac{\ell}{A} \qquad (4),$$

wobei gilt, dass $\varepsilon_0$ die Dielektrizitätskonstante des Vakuums ist (Gleichung (4) stellt somit eine Umformung der Gleichung (2) dar).

Durch Bestimmung des Wertes $\varepsilon_r$ für ein spezifischen Packmittel / Packmittelkomponente, welche als Materialkonstante spezifisch ist für die Qualität (im speziellen die chemische Zusammensetzung) des Materials des Packmittels / der Packmittelkomponente und durch Bestimmung des Permeationskoeffizienten (z.B. aus Mocon - Messungen) kann durch die Messung der Kapazität einer Blister-Kavität (bzw. einer Flasche) anhand der Gleichung (1) auf die Permeationsrate geschlossen werden (es gilt dabei die zugrunde liegende Annahme, dass bei der Herstellung einer Blister-Kavität (bzw. einer Flasche), also beim Tiefziehprozess (bzw. Spritz-Blas-Prozess), oder einer sonstigen Packmittelkomponente sich die relative Dielektrizitätszahl des Materials nicht ändert, da die dielektrischen Eigenschaften von Festkörpern in erster Näherung durch ihre Moleküleigenschaften bestimmt sind, welche sich durch ihre Prozessierung (Formgebung der Packmittelkomponente) nicht wesentlich ändern. Anwendungsbeispiel:

Im Folgenden wird dargestellt, wie die in der Patentanmeldung beschriebene kapazitive Messmethode im Rahmen der Verpackungsentwicklung für ein in der Entwicklung befindliches Produkt eingesetzt wird, um eine maximale Grenzpermeation nicht zu überschreiten und damit in der Folge einen maximalen stabilitätskritischen Feuchtegehalt des Produkts bei Lagerung ebenfalls nicht zu überschreiten. Dabei wird zunächst für ein Produkt die geeignete Verpackung ermittelt, welche mit einem Sollwert der Permeationsrate und der zugehörigen Kapazität verbunden ist. Bei einem feuchteempfindlichen Produkt ist der Wassergehalt ein entscheidendes Stabilitätskriterium, welches u.a. durch die Permeationsrate der Verpackung bestimmt ist und damit durch kapazitive Messungen vorausberechnet werden kann. Der Sollwert der Permeationsrate ist mit einem im Projekt definierten angestrebten Wassergehaltswert nach Lagerzeit inkl. In-Use gegeben (s. schwarze Kurve in Abb. 6). Unter Berücksichtigung eines Sicherheitspuffers zum stabilitätskritischen Feuchtegehaltswert (rote gestrichelte Linie) wird ein Grenzwert der Permeationsrate definiert (verbunden mit der roten Kurve in Abb. 6). Diese beiden Werte sind über Formel (3) jeweils mit Soll- bzw. Grenzkapazitätswerten eindeutig verbunden. Damit besteht der Vorteil der Methode darin, dass mit einer kapazitiven Messung die Permeation einer Verpackung aus der gemessenen Kapazität des permeationsrelevanten Verpackungsteils nach dem oben beschriebenen Verfahren quantitativ bestimmt werden kann. Ein Grenzwert der Permeationsrate ist unmittelbar erkennbar in Form eines sehr schnell und genau messbaren Grenzwerts der Kapazität. Ein weiterer Vorteil dieses Verfahrens ist die Tatsache, dass es für sehr unterschiedliche Verpackungstypen inkl. Verpackungs-Komponenten verwendbar ist und darüber hinaus mobil eingesetzt werden kann. Analoge Überlegungen kann man bezüglich des unteren Grenzwerts der Permeation anstellen. In manchen Verpackungskonzepten kann es nötig sein, dass eine Mindest-Permeationsrate nicht unterschritten wird. Deren Überprüfung kann mit dem hier vorgeschlagenen Verfahren über die Definition von Grenzkapazitäten für minimale bzw. bei Verpackungen in Feuchtekorridoren durch Definition beider Grenzwertkapazitäten erfolgen.

Umfasst ist beispielsweise auch die spezielle Ausführungsform für eine Hohlkörper-förmige Verpackungskomponente (z.B. Flasche), bei der die Hohlkörper-förmige Verpackungskomponente mit einer elektrisch leitenden Flüssigkeit gefüllt und anschließend verschlossen wird. Im Anschluss wird mit einer Nadel oder einem Bohrer (beide elektrisch leitfähig) der Deckel oder die Wandung der Hohlkörper-förmigen Verpackungskomponente durchbohrt, um die innere Elektrode (=elektrisch leitende Flüssigkeit) zu kontaktieren.

Wichtig ist, dass die in die Hohlkörper-förmige Verpackungskomponente eingeführte Elektrode gegen die Umgebung isoliert wird um einen Kurzschluss zu vermeiden. Umgeben wird die Hohlkörper-förmige Verpackungskomponente mit einer elektrisch leitenden Flüssigkeit, welche die äußere Elektrode des Kondensators darstellt. Durch Messung der Kapazität wird das integrale Verhältnis $A/\ell$ bestimmt. Bei bekannter relativer Dielektrizitätszahl sowie dem Permeationskoeffizienten kann die Permeationsrate bestimmt werden. Eine ortsaufgelöste Messung ist ebenfalls realisierbar, indem die Kapazität als Funktion der Füllhöhe in der Hohlkörper-förmigen Verpackungskomponente untersucht wird, um so z.B. eine Ausdünnung der Hohlkörper-förmigen Verpackungskomponente /z.B. des Flaschenbodens, Wände, Kanten, Ecken) zu untersuchen. Auch kann eine Verpackung geneigt oder gelegt werden, um damit spezielle Bereiche selektiv zu untersuchen. Es erweist sich als vorteilhaft, dass das hier vorgeschlagene Verfahren geeignet ist, jede undichte Stelle in einer Hohlkörper-förmigen Verpackungskomponente (z.B. einer Flasche) zu erkennen, da in diesem Fall ein Kurzschluss zwischen beiden Elektroden auftritt. Damit ist das hier vorgeschlagene Messverfahren schneller als der Blaubad-Test und hat den Vorteil, dass es auf die Deformation von Flaschen durch den angelegten Druckunterschied (Prinzip des Blaubad-Tests) völlig verzichtet.

Neben der Information "dicht" oder "undicht" erhält man über die hier vorgeschlagene kapazitive Methode die Information, wie groß die Permeationsrate bei optisch intakt gelieferten Hohlkörper-förmigen Verpackungskomponenten (z.B. Flaschen) ist. Damit können gegebenenfalls Hohlkörper-förmigen Verpackungskomponenten aussortiert werden, die im Blaubad-Test als "dicht" bewertet wurden, deren Permeationsrate aber dennoch für das Produkt zu hoch wäre, um während der Laufzeit die Produktstabilität zu garantieren. Ein weiterer Vorteil des hier vorgeschlagenen kapazitiven Messverfahrens gegenüber dem Blaubadtest ist neben der höheren Genauigkeit auch die kürzere Messdauer und damit der höhere Durchsatz an zu untersuchenden Proben.

Zusätzlich kann mit dem Messverfahren durch eine zusätzliche Modulation des Wasserdrucks in der Hohlkörper-förmigen Verpackungskomponente das Messverfahren genutzt werden, um eine Bewertung der Flaschen unter Stressbedingungen (z.B. Transport der Flaschen mit dem Flugzeug) zu simulieren.

In einer weiteren speziellen Anwendung kann das Messverfahren wie folgt auch für Al/Al-Blister (Blister, welche aus Aluminium-basierten Komposit-Folien bestehen) verwendet werden. Der typische Aufbau von Deck- und Bodenfolie einer Aluminium-basierten Komposit-Folie sieht folgendermaßen aus:

Bodenfolie, Aufbau: 25 $\mu$m oPA / 45 $\mu$m Al / 60 $\mu$m PVC

Deckfolie, Aufbau: 25 $\mu$m Al weich

Die Deckfolie wird gegen das PVC der Bodenfolie gesiegelt. Damit kann die beiden Al-Schichten erfindungsgemäß als Elektroden für das dazwischen liegende Dielektrikum PVC verwendet werden. Zu beachten ist, dass beim Al/Al-Blister die PVC-Schicht auch in der Kavität verläuft, dort nicht zur Permeationsrate beiträgt, aber zur Kapazität. Dies kann jedoch in der Auswertung/Modellierung problemlos berücksichtigt werden.

Neben dem Al/Al-Blister kann mit der hier vorgeschlagenen Methode auch ein Aluminium-Pouch untersucht werden, wenn dieser z.B. eine Polymerschicht im Inneren hat, die zum Siegeln verwendet wird. Die Kapazitätsmessung ist analog zum Al/Al-Blister auszuwerten.

In einer weiteren Variante kann das Messverfahren genutzt werden, um produktberührende und nicht produktberührende Behälter für Inhalationslösungen (beispielsweise FDD-Behälter) auf Dichtigkeit bzw. hinreichende Wanddicke zu überprüfen.

In einer weiteren Variante kann die hier vorgeschlagene kapazitive Methode dazu genutzt werden, um bei Flaschen aller nicht oder sehr gering leitfähigen Materialien (z.B. auch Glas) die Wanddicke zu bestimmen.

## Patentansprüche

**1.** Verfahren zur Bestimmung der mittleren Schichtdicke $\ell$ eines flächigen Verpackungsmaterials für pharmazeutische Verpackungen, wobei mittels zwei an den gegenüberliegenden Außenflächen des Verpackungsmaterials angebrachten Elektroden die Kapazität gemessen wird, so dass mit Hilfe der materialspezifischen relativen Dielektrizitätszahl $\varepsilon_r$ sowie bekannter Fläche A der Elektroden die mittlere Schichtdicke $\ell$ berechnet werden kann, dadurch charakterisiert, dass bei dem Verfahren die Elektrodenfläche A der beiden Elektroden der Fläche des Packmittels entspricht, zwischen deren Oberfläche die mittlere Schichtdicke bestimmt werden soll, wobei eine Vorrichtung verwendet wird, die zwei Elektroden umfasst, zwischen denen das Verpackungsmaterial eingesetzt ist, und wobei die Vorrichtung aus einer Messkammer besteht, in die das Verpackungsmaterial eingespannt wird, so dass sich zwei getrennte Messkammerhälften ergeben, die durch das Verpackungsmaterial getrennt sind, wobei die die beiden gegenüberliegenden Oberflächen des Verpackungsmaterials in den beiden Messkammerhälften mit den Elektroden verbunden sind.

2. Verfahren nach Anspruch 1, **dadurch gekennzeichnet, dass** die Messkammerhälften mit einer elektrisch leitfähigen Flüssigkeit gefüllt werden, so dass die gegenüberliegenden Oberflächen des Verpackungsmaterials, zwischen denen die mittlere Schichtdicke bestimmt werden soll, elektrisch leitfähig mit den Elektrodenanschlüssen verbunden sind.

**Claims**

1. Method of determining the average layer thickness $\ell$ of a planar packaging material for pharmaceutical packaging, wherein the capacitance is measured by means of two electrodes applied to the opposing outer surfaces of the packaging material, so that the average layer thickness $\ell$ can be calculated by means of the material-specific relative dielectric constant $\varepsilon_r$ and the known area A of the electrodes, **characterised in that** in the method the electrode area A of the two electrodes corresponds to the area of the packaging between the surfaces of which the average layer thickness is to be determined, a device being used which comprises two electrodes between which the packaging material is inserted, and the device consisting of a measuring chamber into which the packaging material is clamped, so that two separate measuring chamber halves are produced which are separated by the packaging material, the two opposing surfaces of the packaging material in the two measuring chamber halves being connected to the electrodes.

2. Method according to claim 1, **characterised in that** the measuring chamber halves are filled with an electrically conductive liquid, so that the opposing surfaces of the packaging material between which the average layer thickness is to be determined are electrically conductively connected to the electrode connections.

**Revendications**

1. Procédé de détermination de l'épaisseur de couche moyenne $\ell$ d'un matériau d'emballage plat pour des emballages pharmaceutiques, dans lequel la capacité est mesurée au moyen de deux électrodes installées sur les faces extérieures opposées du matériau d'emballage de sorte que l'épaisseur de couche moyenne $\ell$ peut être calculée à l'aide de la constante diélectrique relative $\varepsilon_r$ spécifique au matériau et de la superficie A connue des électrodes, **caractérisé en ce que** dans le procédé la superficie d'électrodes A des deux électrodes correspond à la superficie du moyen de conditionnement, entre la surface desquelles l'épaisseur de couche moyenne doit être déterminée, dans lequel est utilisé un dispositif, qui comprend deux électrodes, entre lesquelles le matériau d'emballage est inséré, et dans lequel le dispositif est constitué d'une chambre de mesure, dans laquelle le matériau d'emballage est enserré de sorte qu'il en résulte deux moitiés de chambre de mesure séparées, qui sont séparées par le matériau d'emballage, dans lequel les deux surfaces opposées du matériau d'emballage sont reliées aux électrodes dans les deux moitiés de chambre de mesure.

2. Procédé selon la revendication 1, **caractérisé en ce que** les moitiés de chambre de mesure sont remplies d'un liquide électriquement conducteur de sorte que les surfaces opposées du matériau d'emballage, entre lesquelles l'épaisseur de couche moyenne doit être déterminée, sont reliées de manière électriquement conductrice aux raccords d'électrode.

Fig. 1:

Fig. 2:

**Fig. 3:**

EP 2 929 313 B1

**Fig. 4:**

**Fig. 5:**

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4952882 A

- EP 0259110 A2

**In der Beschreibung aufgeführte Nicht-Patentliteratur**

- **G. VAN HALTERN.** *Trace moisture measurement with quartz crystal microbalance Technology,* 2003, vol. 1784, 81-86